Europäisches Patentamt

European Patent Office

Office européen des brevets

(11) Publication number: **0 156 060**
**B1**

# EUROPEAN PATENT SPECIFICATION

(45) Date of publication of patent specification: **17.11.88**

(51) Int. Cl.⁴: **C 08 J 5/18, C 08 F 138/02**

(21) Application number: **84306166.4**

(22) Date of filing: **10.09.84**

(54) **Apparatus for producing polyacetylene film.**

(30) Priority: **15.03.84 JP 37092/84 u**
**16.03.84 JP 37529/84 u**

(43) Date of publication of application:
**02.10.85 Bulletin 85/40**

(45) Publication of the grant of the patent:
**17.11.88 Bulletin 88/46**

(84) Designated Contracting States:
**DE FR GB**

(56) References cited:
**EP-A-0 138 355**
**DE-A-2 556 418**
**DE-A-3 328 083**

(73) Proprietor: **HOXAN CORPORATION**
**2, Nishi 1-chome Kita 3-jo**
**Chuo-ku Sapporo-shi Hokkaido 060 (JP)**

(72) Inventor: **Hide, Ichiro c/o Hoxan laboratory**
**Hoxan Corporation No. 3-17, Kikusui 5-jo 2-chome**
**Shiroishi-ku Sapporo (JP)**
Inventor: **Umetsu, Junichi c/o Hoxan Laboratory**
**Hoxan Corporation No. 3-17, Kikusui 5-jo 2-chome**
**Shiroishi-ku Sapporo (JP)**

(74) Representative: **Spencer, Graham Easdale et al**
**A.A. Thornton & CO Northumberland House**
**303-306, High Holborn**
**London WC1V 7LE (GB)**

Courier Press, Leamington Spa, England.

## Description

This invention relates to an apparatus for producing polyacetylene film and, more particularly, to such an apparatus adapted to produce polyacetylene film having uniform thickness and large area.

A polyacetylene is a simple chain-conjugated high-molecular compound which contains as ingredients carbon atoms and hydrogen atoms. It has properties as a semiconductor. In particular, a polyacetylene membrane made using a Ziegler-Natta catalyst [Ti(OC$_4$H$_9$)$_4$-Al(C$_2$H$_5$)$_3$ series] has a fibril (fibrous ultrafine crystal) mesh structure of approximately 200° Å (20 nm) in diameter. When this membrane is slightly doped with halogen gas or arsenic pentafluoride, its electrical conductivity can be varied over a wide range.

Because polyacetylene membranes have excellent chemical stability, are of light weight and have a fibril mesh structure resulting in a large surface area, they are very suitable as electrode materials for a secondary battery or in integrated circuits.

It is known to make the above-described polyacetylene film, by preparing a Ziegler-Natta catalyst having a molar ratio of aluminum/titanium of 3 to 4, cooling the catalyst to -78°C with a refrigerant of a dry ice/methanol, and blowing acetylene gas onto the catalyst to polymerize the gas in the vicinity of the boundary between the vapor phase and the liquid phase on the surface of the catalyst solution.

Another procedure is described in DE-A-3328083. Here, a large test-tube is maintained horizontal and a quantity of catalyst solution is introduced. The tube is evacuated and slowly rotated to form a layer of catalyst spread over the inner wall of the test-tube. The layer so formed is not free-flowing. Then acetylene is introduced into the test-tube and polymerisation occurs with the formation of a polymer film on the surface of the catalyst.

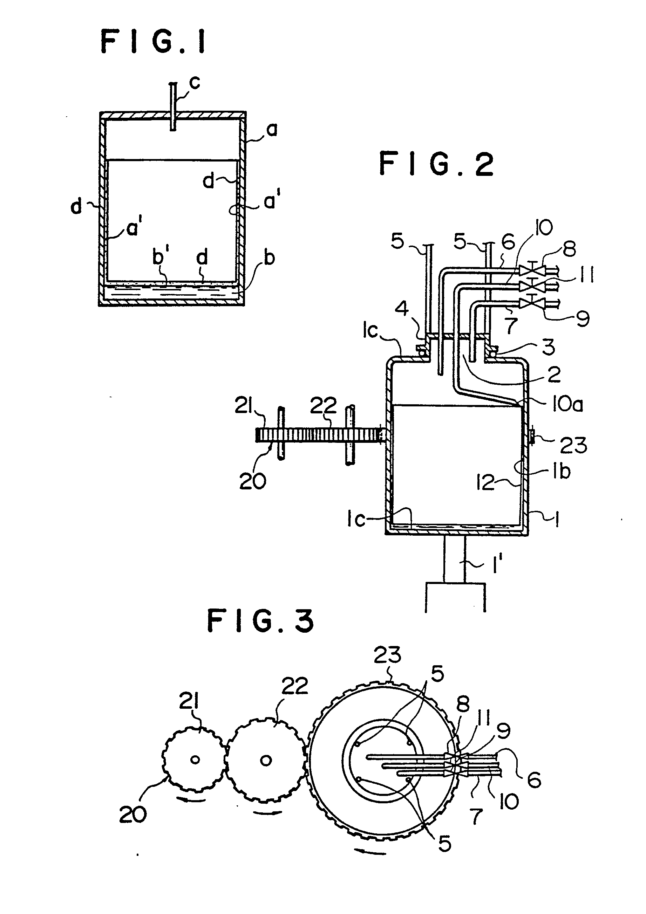

In our European specification EP-A-0138355 (published after the priority date of the present application), there is described a further method of making polyacetylene. The apparatus used in this further method is illustrated in schematic vertical sectional view in Figure 1 of the drawings accompanying the present application. Referring to Figure 1, Ziegler-Natta catalyst b is stored in a cylindrical vessel a. The vessel is agitated to coat the catalyst b on the inner side wall surface a' of the vessel a. Then, acetylene gas is introduced into the vessel from the supply tube c and a polyacetylene film is formed by polymerization of the gas over the boundary between the vapor phase and the liquid phase of the catalyst b, both in the bottom of the vessel a and on the inner wall surface a'.

In this procedure, the polyacetylene film d produced on the surface b' of the catalyst in the bottom of vessel a is impregnated with a large quantity of catalyst in the fibril mesh structure.

Accordingly, the quality of this part of the film is reduced, and only the polyacetylene film d produced on the inner wall surface a' can be utilized as an electrode material and the like. Thus the production efficiency of the process is not as high as could be desired. Also the catalyst b coated on the side wall surface a' tends to flow down towards the bottom surface even in the polyacetylene film d of the inner wall surface. Thus, the lower region of the side wall surfaces tend to have a thicker coating of catalyst which causes difficulties. Also, it is difficult to coat the catalyst sufficiently on the upper part of the surface b', and it is necessary to store a large quantity of the catalyst in the bottom of the vessel and then to rotate it at a high speed.

We have now devised an apparatus for producing a polyacetylene film by which the aforementioned drawbacks and disadvantages can be reduced or overcome. In particular, in accordance with the present invention, it is possible to continuously freely coat catalyst from the inner surface of the side wall to the inner surface of the bottom of a container by arranging a catalyst introduction conduit for coating the catalyst on the inner surface of the side wall of the container and providing for relative rotation between the container and the conduit.

According to the present invention, there is provided apparatus for producing polyacetylene film by contacting acetylene gas with Ziegler-Natta catalyst to polymerize the acetylene gas, which apparatus comprises a cylindrical, upright vessel; conduit means for introducing Ziegler-Natta catalyst into the vessel, conduit means for introducing acetylene gas into the vessel, and conduit means for removing unreacted acetylene gas from the vessel, the vessel including a top closure cap, and wherein the open end of the catalyst introduction conduit means is disposed in the vessel in the vicinity of the inner surface of the side wall of the vessel, the arrangement being such that catalyst conduit means and vessel can be relatively rotated whereby catalyst flowing from the end of the catalyst conduit means is coated on the said inner surface of the side wall and therefrom on the bottom of the vessel; the apparatus further including a rotary transmission mechanism for providing drive for the said relative rotation of the catalyst conduit means and vessel.

In order that the invention may be more fully understood, various embodiments thereof will now be described, by way of example only, with reference to Figures 2 to 9 of the accompanying drawings:

FIG. 1 is a schematic vertical sectional front view showing a conventional apparatus for producing a polyacetylene film (discussed above);

FIGS. 2 and 3 are vertical sectional front and plan views of an embodiment of apparatus according to the present invention;

FIGS. 4 and 5 are vertical sectional front and plan views of another embodiment of apparatus according to the present invention;

FIGS. 6 and 7 are vertical sectional front and plan views of a further embodiment of apparatus according to the present invention; and

FIGS. 8 and 9 are vertical sectional front and plan views of another embodiment of apparatus according to the present invention.

In Figs. 2 and 3, there is shown an upright cylindrical vessel 1 having side wall 1b and top and bottom walls 1c. Top wall 1c has a central opening 2. A cupshaped cap 4 is provided externally of vessel 1 to close the opening 2, the cap and vessel being relatively slidable through an O-ring 3 engaged with the outer periphery of the lower end of cap 4 and the outer surface of top wall 1c around the periphery of the opening 2. The cap 4 is fixedly secured by fastening arm levers 5. The vessel 1 is mounted for axial rotation on an axial rotatable support shaft 1'.

A conduit 6 for introducing acetylene gas, connected to a upply source (not shown), and an exhaust conduit 7 for removing unreacted acetylene gas from the vessel 1 pass into the vessel 1 through the cap 4, and control valves 8, 9 are respectively provided in the conduits 6 and 7 for maintaining the acetylene gas atmosphere in the vessel at a predetermined constant pressure.

Further, a conduit 10 connected to a supply source (not shown) of catalyst, such as Ziegler-Natta catalyst, passes through the cap 4, into vessel 1. The conduit 10 within the vessel 1 is bent into substantially an L-shape so that its open end 10a is disposed in the vicinity of the inner surface 1b of the wall. Thus, catalyst can be introduced into the vessel and coated on the inner surface 1b of the side wall of the vessel 1. A catalyst control valve 11 for controlling the quantity of the catalyst to be introduced into the vessel 1 is provided in the conduit 10.

A rotary transmission mechanism 20 is provided for rotatably driving the vessel 1. The mechanism includes a drive gear 21 rotated by a drive source (not shown), engaged through intermediate gear 22 with a driven gear 23 provided on the outer periphery of the vessel 1.

In operation of the apparatus for producing polyacetylene film, the vessel 1 is evacuated and rotated by the rotary transmission mechanism 20. The catalyst control valve 11 is opened to admit catalyst through conduit 10 into vessel 1. The catalyst flows from the conduit end 10a to coat the inner surface 1b of the side wall of the vessel 1 and the entire inner bottom surface 1c of the vessel. In this case, the control valve 11 is used to allow only the desired quantity of catalyst to be introduced.

After the catalyst control valve 11 is closed, the gas control valve 8 is opened to introduce the acetylene gas into the vessel 1. The acetylene gas enters the vessel and is polymerized by the Ziegler-Natta catalyst coated on the inner side wall surface 1b and bottom surface 1c of the vessel to produce the polyacetylene film 12. In this case, the vessel 1 may remain rotating or may be gradually stopped.

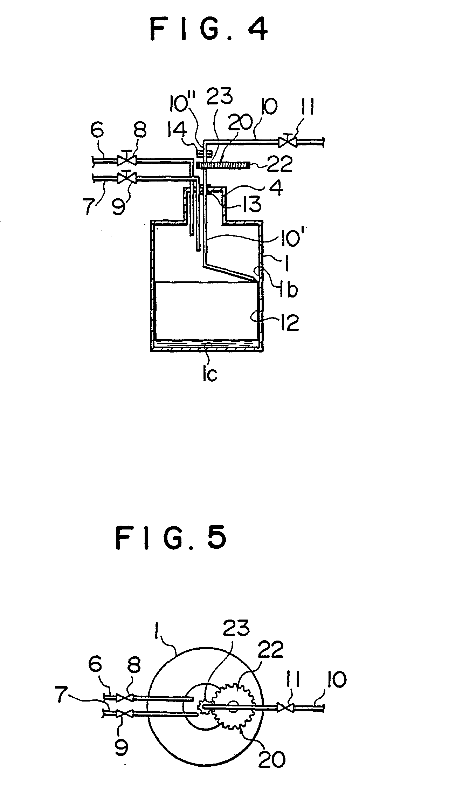

Figs. 4 and 5 show another embodiment. Here, the vessel 1 is not rotated but, instead, a rotatable portion 10' of conduit 10 is rotated. Portion 10' is joined to the non-rotatable portion 10'' of conduit 10 by a mechanical seal 14. Thus, the rotary transmission mechanism 20 comprises a drive gear rotated by a drive source (not shown), to drive (through intermediate gear 22) a driven gear 23 provided on the outer periphery of the conduit portion 10'. To ensure an adequate seal between conduit portion 10' and cap 4, an O-ring 13 is provided.

In the above embodiments, means may be provided for adjusting the height of conduit end 10a within vessel 1, thereby to control the wall area to be coated with the catalyst so as to determine the area of the polyacetylene film 12 to be produced. Also, the time required for coating the catalyst may be shortened by providing a plurality of conduits 10.

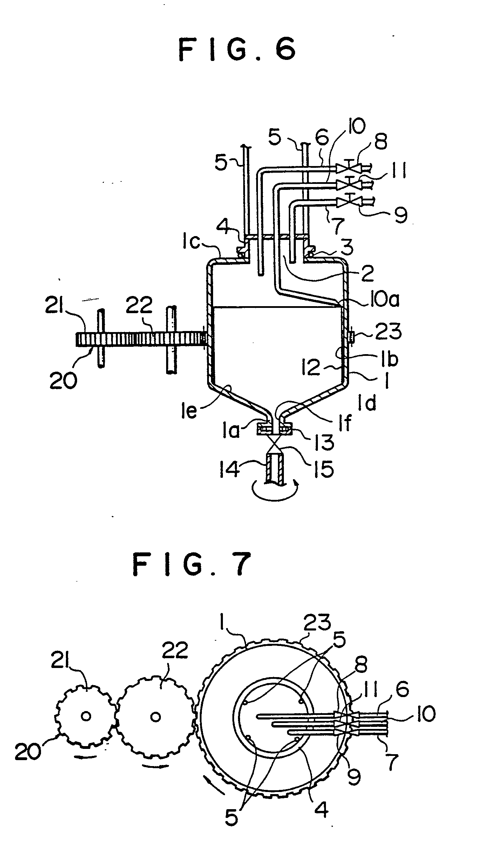

Another embodiment of the invention will now be described in detail with reference to Figs. 6 and 7. Here, the fundamental structure of the embodiment is the same as that of the first embodiment and the same reference numerals indicate the same or corresponding parts.

The difference between this embodiment and the first embodiment of the invention is that the bottom 1d of vessel 1 is tapered to converge downwardly, and has a central exit 1f for exhausting the catalyst from the vessel. The catalyst passes through the rotary support shaft 1a, the shaft 1a being further connected to the catalyst exhaust conduit 14 through a mechanical seal 13, and a catalyst exhaust valve 15 is interposed in the conduit 14 for controlling the quantity of the catalyst flowing out.

Then, in operation for producing the polyacetylene film, the vessel 1, with inert gas sealed therein is first rotated by the rotary transmission mechanism 20, the catalyst control valve 11 is then opened suitably to coat the Ziegler-Natta catalyst issuing from the opening 10a at the end of the conduit 10 over the entire inner surfaces therebelow of the side wall and the bottom of vessel 1. In this case, control of the quantity of catalyst to be introduced is effected by control valve 11 in the same manner as the first embodiment, but the catalyst control valve 15 may be used so that the quantity of the catalyst to be coated does not become excessive. Subsequently, steps for producing the polyacetylene film are the same as previously described with respect to the first embodiment.

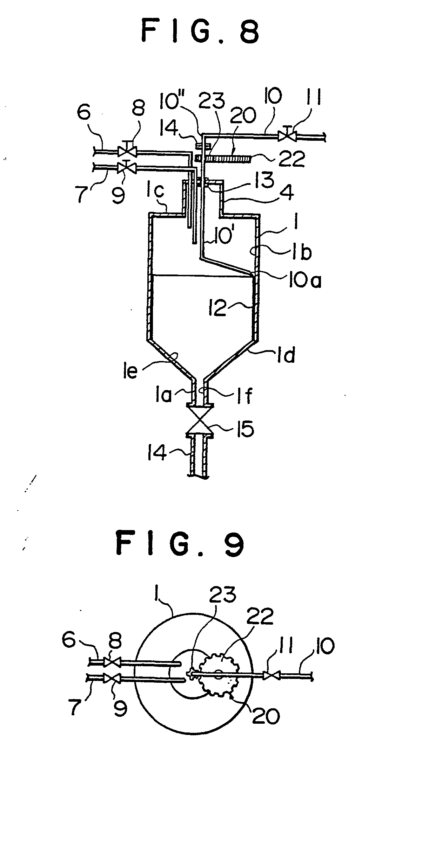

The modified embodiment shown in Figs. 8 and 9 is constructed similar to that shown in Figs. 4 and 5. Thus, whilst vessel 1 is rotatable in the embodiments shown in Figs. 6 and 7, in the modified embodiment in Figs. 8 and 9 the catalyst introducing conduit 10 is rotatable. Since the contruction and the operation of this modified embodiment is substantially the same as shown in Figs. 4 and 5, no further detailed description of this modified embodiment is given.

According to the first embodiment of the present invention as described above, there is provided an apparatus for producing a polyacetylene film by contacting acetylene gas with Ziegler-Natta catalyst to polymerize the acetylene gas in a vessel 1 which comprises a catalyst introduction conduit 10 to be introduced with the Ziegler-Natta catalyst provided at a cap 4 provided at the top of the vessel 1 and having an end opening 10a disposed in the vicinity of the inner surface 1b of the side wall of the vessel in such a manner that the conduit 10 and the vessel 1 are relatively moved in rotation, and a rotary transmission mechanism 20 for driving to rotatably coat the catalyst flowed out from the end opening 10a of the conduit 10 on the inner surface 1b of the bottom from the inner surface 1b of the side wall of the vessel 1. Thus, the polyacetylene film 12 can be produced in a uniform thickness and in a relatively large area by introducing the Ziegler-Natta catalyst of the suitable quantity, and the catalyst can be spread over the entire surface rapidly by the relative rotation between the conduit and the vessel. Accordingly, the catalyst is not partly excessively coated, thereby obtaining the polyacetylene film of high quality.

Further, according to the second or still another embodiment of the present invention, there is provided an apparatus for producing a polyacetylene film, constructed in the same manner as the first embodiment, in which the bottom of the vessel is further formed in a converted tapered shape and an exit 1f is provided at the end of the bottom of the vessel. Thus, the catalyst is not excessively coated due to the introduction of the excessive catalyst, thereby obtaining the polyacetylene film of high quality in addition to the advantages of the first embodiment of the invention.

## Claims

1. Apparatus for producing polyacetylene film (12) by contacting acetylene gas with Ziegler-Natta catalyst to polymerize the acetylene gas, which apparatus comprises a cylindrical, upright vessel (1); conduit means (10) for introducing Ziegler-Natta catalyst into the vessel, conduit means (6) for introducing acetylene gas into the vessel, and conduit means (7) for removing unreacted acetylene gas from the vessel, the vessel including a top closure cap (4), and wherein the open end (10a) of the catalyst introduction conduit means (10) is disposed in the vessel in the vicinity of the inner surface of the side wall of the vessel, the arrangement being such that catalyst conduit means (10) and vessel (1) can be relatively rotated wherein catalyst flowing from the end (10a) of the catalyst conduit (10) is coated on the said inner surface of the side wall and therefrom on the bottom of the vessel; the apparatus further including a rotary transmission mechanism (20) for providing drive for the said relative rotation of the catalyst conduit means (10) and vessel (1).

2. Apparatus according to claim 1, wherein said rotary transmission mechanism (20) is integrally formed with said vessel (1) to rotate the vessel.

3. Apparatus according to claim 1, wherein said rotary transmission mechanism (20) is integrally formed with a rotary portion (10') of said catalyst conduit means (10) to rotate said conduit.

4. Apparatus according to claim 1, wherein the height of the end (10a) of the catalyst conduit means (6) is adjustable in the vessel (1) to vary the area of the side wall coated with catalyst.

5. Apparatus according to any of claims 1 to 4, wherein the bottom (1c) of the vessel (1) is tapered to a central exit port.

## Patentansprüche

1. Vorrichtung zur Herstellung eines Polyacetylenfilms (12) durch Kontaktieren von Acetylengas mit einem Ziegler-Natta-Katalysator, um das Acetylengas zu polymerisieren, wobei die Vorrichtung umfaßt: einen zylindrischen, stehenden Behälter (1); eine Leitungseinrichtung (10) zur Einführung des Ziegler-Natta-Katalysators in den Behälter, eine Leitungseinrichtung (6) zur Einführung von Acetylengas in den Behälter und eine Leitungseinrichtung (7) zur Entfernung von unreagiertem Acetylengas aus dem Behälter, wobei der Behälter einen Kopfverschlußdeckel (4) beinhaltet und wobei das offene Ende (10a) der Katalysator-Einführleitungseinrichtung (10) in dem Behälter in der Nähe der Innenoberfläche der Seitenwand des Behälters angeordnet ist, wobei die Anordnung derart ist, daß die Katalysator-Leitungseinrichtung (10) und der Behälter (1) gegeneinander rotiert werden können, wobei aus dem Ende (10a) der Katalysator-Leitung (10) ausströmender Katalysator auf die Innenoberfläche der Seitenwand und von dort auf den Boden des Behälters aufgetragen wird; wobei die Vorrichtung weiterhin einen Rotationstransmissionsmechanismus (20) für den Antrieb der Relativrotation der Katalysator-Leitungseinrichtung (10) und des Behälters (1) beinhaltet.

2. Vorrichtung nach Anspruch 1, wobei der Rotationstransmissionsmechanismus (20) integral mit dem Behälter (1) ausgebildet ist, um den Behälter zu rotieren.

3. Vorrichtung nach Anspruch 1, wobei der Rotationstransmissionsmechanismus (20) integral mit einem Ritationsteil (10') der Katalysator-Leitungseinrichtung (10) ausgebildet ist, um die Leitung zu rotieren.

4. Vorrichtung nach Anspruch 1, wobei die Höhe des Endes (10a) der Katalysator-Leitungseinrichtung (6) in dem Behälter (1) einstellbar ist, um den Bereich der Seitenwand, auf den Katalysator aufgetragen wird, zu variieren.

5. Vorrichtung nach mindestens einem der Ansprüche 1 bis 4, wobei der Boden (1c) des Behälters (1) zu einer zentralen Auslaßöffnung abgeschrägt ist.

## Revendications

1. Appareil pour la production des films de polyacétylène (12) par mise en contact de l'acétylène gazeux avec le catalyseur de Ziegler-Natta pour polymériser l'acétylène gazeux, ledit appareil comprenant un récipient cylindrique vertical (1); un conduit (10) pour l'introduction du catalyseur de Ziegler-Natta à l'intérieur du récipient, un conduit (6) pour introduire l'acétylène gazeux à l'intérieur du récipient, un conduit (7) pour évacuer l'acétylène gazeux n'ayant pas réagi du récipient, le récipient incluant un capuchon supérieur de fermeture (4), et l'extrémité ouverte (10a) du conduit d'introduction de catalyseur (10) étant disposée à l'intérieur du récipient dans le voisinage de la surface intérieure de la paroi latérale du récipient, l'agencement étant tel que le conduit de catalyseur (10) et le récipient (1) peuvent être animés d'un mouvement de rotation relatif de façon que le catalyseur s'écoulant de l'extrémité (10a) du conduit de catalyseur (10) est enduit sur ladite surface intérieure de la paroi latérale et de là sur le fond du récipient; l'appareil incluant en outre un mécanisme de transmission de rotation (20) pour fournir un entraînement pour obtenir ladite rotation relative entre le conduit de catalyseur (10) et le récipient (1).

2. Appareil selon la revendication 1, selon lequel ledit mécanisme de transmission de rotation (20) forme partie intégrante dudit récipient (1) pour faire tourner le récipient.

3. Appareil selon la revendication 1, selon lequel le mécanisme de transmission de rotation (20) forme partie intégrante d'une portion rotative (10') dudit conduit de catalyseur (10) pour faire tourner ledit conduit.

4. Appareil selon la revendication 1, selon lequel la hauteur de l'extrémité (10a) du conduit de catalyseur (6) est ajustable dans le récipient (1) pour faire varier la surface de la paroi latérale enduite de catalyseur.

5. Appareil selon l'une quelconque des revendications 1 à 4, selon lequel le fond (1c) du récipient (1) est conique et se termine par une ouverture centrale de sortie.

# FIG.1

c

a

d

d

a'

a'

d

b'

d

b

# FIG.2

5    5    6    10    8    11

1c    4    7    9

3

2

10a

21    22

23

20    1b

1c    12    1

1'

# FIG.3

23    5

21    22    8    11    9

6

20    7    10

5

## F I G. 4

## F I G. 5

# FIG. 6

# FIG. 7

# FIG. 8

# FIG. 9